(19) Europäisches Patentamt / European Patent Office / Office européen des brevets

(11) **EP 2 959 308 B1**

(12) **FASCICULE DE BREVET EUROPEEN**

(45) Date de publication et mention de la délivrance du brevet:
**28.06.2017 Bulletin 2017/26**

(21) Numéro de dépôt: **14706818.3**

(22) Date de dépôt: **25.02.2014**

(51) Int Cl.:
**G01S 3/48** *(2006.01)*  **G01S 5/02** *(2010.01)*
**G01S 5/12** *(2006.01)*  **H04B 7/185** *(2006.01)*

(86) Numéro de dépôt international:
**PCT/EP2014/053583**

(87) Numéro de publication internationale:
**WO 2014/128304 (28.08.2014 Gazette 2014/35)**

(54) **PROCÉDÉ ET SYSTÈME D'ESTIMATION DE DIRECTION D'ARRIVÉE D'UN SIGNAL CIBLE PAR RAPPORT À UN SATELLITE**

VERFAHREN UND SYSTEM ZUR ABSCHÄTZUNG DER EINFALLSRICHTUNG EINES ZIELSIGNALS RELATIV ZU EINEM SATELLITEN

METHOD AND SYSTEM FOR ESTIMATING THE DIRECTION OF ARRIVAL OF A TARGET SIGNAL RELATIVE TO A SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.02.2013 FR 1300424**

(43) Date de publication de la demande:
**30.12.2015 Bulletin 2015/53**

(73) Titulaire: **Airbus Defence and Space SAS**
**78130 Les Mureaux (FR)**

(72) Inventeurs:
• **AYMES, Jean-Marc**
  **F-31650 Saint Orens de Gameville (FR)**
• **SANCHEZ, Raphaël**
  **F-31130 Balma (FR)**
• **VOULOUZAN, Frédéric**
  **F-31500 Toulouse (FR)**

(74) Mandataire: **Ipside**
  **6, Impasse Michel Labrousse**
  **31100 Toulouse (FR)**

(56) Documents cités:
**US-A- 6 147 640    US-A1- 2006 082 501**

**Description**

## DOMAINE TECHNIQUE

La présente invention appartient au domaine des systèmes satellitaires, et concerne plus particulièrement un procédé et un système d'estimation de direction d'arrivée d'un signal cible par rapport à un réseau d'antennes de mesure d'un satellite en orbite terrestre.

La présente invention trouve des applications particulièrement avantageuses, bien que non limitatives, pour l'estimation de la position d'émetteurs sensiblement à la surface de la Terre et/ou l'estimation d'attitude de satellites en orbite terrestre.

## ÉTAT DE LA TECHNIQUE

Un satellite de télécommunications comporte généralement plusieurs antennes de réception pour recevoir des signaux de télécommunications émis depuis la Terre, lesdites antennes de réception desservant des zones géographiques différentes. Un tel satellite de télécommunications comporte également une ou plusieurs antennes d'émission pour retransmettre lesdits signaux de télécommunications en direction de la Terre.

Il n'est pas rare que des signaux d'interférence soient reçus par une ou plusieurs antennes de réception d'un satellite de télécommunications. De tels signaux d'interférence peuvent conduire à une dégradation des services offerts par le satellite de télécommunications.

Afin de pouvoir réduire ou supprimer un signal d'interférence, il peut être utile de connaître la position d'un interféreur à l'origine de ce signal d'interférence. Une fois cette position connue, il est par exemple possible d'intervenir sur site afin d'interrompre l'émission du signal d'interférence.

En alternative, dans le cas d'antennes de réception dont le diagramme de rayonnement est modifiable (par exemple dans le cas d'une antenne de réception formée par un réseau d'antennes de réception élémentaires), ledit diagramme de rayonnement peut être modifié de sorte à atténuer fortement tous les signaux reçus dans la direction d'arrivée du signal d'interférence.

Pour estimer la direction d'arrivée d'un signal d'interférence, il est connu du brevet US 6147640 de munir le satellite de télécommunications d'un réseau d'antennes de mesure mises en oeuvre pour effectuer des mesures interférométriques sur le signal d'interférence, une mesure interférométrique étant une estimation de la différence de phase entre des signaux, dits « signaux de mesure », reçus par deux antennes de mesure différentes et correspondant au signal d'interférence. De telles mesures interférométriques peuvent, de manière connue, être utilisées pour estimer la direction d'arrivée du signal d'interférence par rapport au réseau d'antennes de mesure.

Toutefois, la solution décrite dans le brevet US 6147640 présente des limitations.

En effet, en considérant par exemple un satellite en orbite géostationnaire à environ 36000 kilomètres d'altitude, chaque antenne de mesure devra présenter un gain important pour pouvoir détecter tout signal d'interférence. Pour cela, chaque antenne de mesure aura des dimensions importantes et encombrantes. En outre, chaque antenne de mesure présentera alors un champ de vue étroit, de sorte que la couverture géographique, dans laquelle un interféreur pourra être localisé, sera réduite.

Dans le cas contraire, c'est-à-dire dans le cas d'antennes de mesure de gain et d'encombrement faibles, seuls des signaux d'interférence très forts pourront être détectés par la solution décrite dans le brevet US 6147640 de sorte que, en pratique, de nombreux cas de signaux d'interférence ne pourront être ni détectés ni localisés.

La demande de brevet US 2006/0082501 décrit une solution pour estimer la direction d'arrivée en élévation d'un signal cible sur un terminal, au sein d'un système de télécommunications exclusivement terrestre. La solution décrite par la demande de brevet US 2006/0082501 n'est cependant pas applicable dans un système de télécommunications par satellite, en particulier dans le cas d'un satellite en orbite géostationnaire.

## EXPOSÉ DE L'INVENTION

La présente invention a pour objectif de remédier à tout ou partie des limitations des solutions de l'art antérieur en proposant une solution qui permet d'estimer la direction d'arrivée de signaux cibles avec un encombrement réduit par rapport aux solutions de l'art antérieur (tout en ayant une couverture géographique importante), et/ou qui permet d'estimer la direction d'arrivée de signaux cibles plus faibles qu'avec les solutions de l'art antérieur.

En outre, la présente invention a également pour objectif de proposer une solution simple et peu coûteuse à mettre en oeuvre.

A cet effet, et selon un premier aspect, l'invention concerne un procédé d'estimation d'une direction d'arrivée d'un signal cible par rapport à un réseau d'antennes de mesure d'un satellite en orbite terrestre, ladite direction d'arrivée du signal cible étant estimée en fonction de signaux, dits « signaux de mesure », correspondant au signal cible reçu par respectivement au moins une première antenne de mesure et une seconde antenne de mesure dudit réseau d'antennes de mesure. Ledit procédé comporte des étapes de :

- combinaison de chacun des signaux de mesure avec un signal, dit « signal de référence », correspondant au signal cible reçu par une antenne de réception du satellite, ladite antenne de réception étant de gain maximal supérieur aux gains maximaux respectifs de la première antenne de mesure et de la seconde antenne de mesure,
- estimation de la direction d'arrivée du signal cible à partir des signaux obtenus par combinaison de chacun desdits signaux de mesure avec le signal de référence.

Du fait que le signal de référence correspond au signal cible reçu par une antenne de réception présentant un gain maximal supérieur aux gains maximaux respectifs des première et seconde antennes de mesure, on comprend que le rapport signal cible sur bruit du signal de référence est supérieur aux rapports signal cible sur bruit des signaux de mesure.

Par conséquent, les signaux obtenus après combinaison présentent un meilleur rapport signal cible sur bruit que les signaux de mesure. Cette amélioration du rapport signal cible sur bruit permet d'améliorer les performances de l'estimation de la direction d'arrivée dudit signal cible et/ou rend possible cette estimation de la direction d'arrivée pour des signaux cibles qui n'étaient pas détectés par les solutions de l'art antérieur, du fait d'un niveau de réception trop faible.

Cette amélioration du rapport signal cible sur bruit permet également, par rapport aux solutions de l'art antérieur, d'effectuer des mesures avec des temps de mesure plus réduits pour une précision équivalente.

Par ailleurs, la solution proposée rend possible l'estimation de la direction d'arrivée pour des signaux cibles intermittents et / ou de fréquence variable au cours du temps. Par exemple, la solution rend possible l'estimation de la direction d'arrivée de signaux émis notamment par:

- un radar, ou
- un terminal particulier d'un système de télécommunications basé sur un accès multiple à répartition dans le temps (« Time Division Multiple Access » ou TDMA), tel qu'un terminal VSAT, ou
- un terminal balayant une plage de fréquences suite à une panne (connu sous le nom de « sweeper » dans la littérature anglo-saxonne), etc.

Puisque l'utilisation du signal de référence permet d'améliorer le rapport signal cible sur bruit, la contrainte sur les gains maximaux des première et seconde antennes de mesure peut en outre être relâchée. Lesdites première et seconde antennes de mesure peuvent être peu directives, et donc être peu encombrantes tout en ayant une couverture géographique importante.

Dans des modes particuliers de mise en oeuvre, le procédé d'estimation de direction d'arrivée peut comporter en outre l'une ou plusieurs des caractéristiques suivantes, prises isolément ou selon toutes les combinaisons techniquement possibles.

Dans un mode particulier de mise en oeuvre, le satellite comportant plusieurs antennes de réception desservant différentes zones géographiques de la Terre, chaque antenne de réception étant de gain maximal supérieur aux gains maximaux respectifs des première et seconde antennes de mesure, et la première antenne de mesure et la seconde antenne de mesure desservant toutes les zones géographiques desservies par les différentes antennes de réception, ledit procédé comporte une étape de détermination de l'antenne de réception par laquelle le signal cible est reçu, le signal reçu par l'antenne de réception déterminée étant utilisé comme signal de référence.

De telles dispositions permettent d'améliorer le rapport signal cible sur bruit dans la mesure où les signaux provenant des zones géographiques différentes de celle depuis laquelle le signal cible a été émis seront atténués.

Dans un mode particulier de mise en oeuvre, au cours de l'étape de combinaison :

- une première combinaison est calculée entre le signal de référence et le signal de mesure reçus par respectivement l'antenne de réception et la première antenne de mesure au cours d'un premier intervalle de temps,
- une seconde combinaison est calculée entre le signal de référence et le signal de mesure reçus par respectivement l'antenne de réception et la seconde antenne de mesure au cours d'un second intervalle de temps, distinct du premier intervalle de temps,

la direction d'arrivée du signal cible étant estimée en fonction au moins desdites première et seconde combinaisons.

Dans un mode particulier de mise en oeuvre, au moins une ressource matérielle de chaînes de traitement des signaux de mesure à bord du satellite est mise en oeuvre pour traiter à la fois le signal de mesure de la première antenne de mesure et le signal de mesure de la seconde antenne de mesure au cours d'intervalles de temps respectifs différents.

De telles dispositions permettent de réduire, pour le satellite, le surcoût lié à l'estimation de la direction d'arrivée.

Dans un mode particulier de mise en oeuvre, au moins une ressource matérielle mise en oeuvre pour traiter à la fois le signal de mesure de la première antenne de mesure et le signal de mesure de la seconde antenne de mesure au cours d'intervalles de temps respectifs différents est un convertisseur analogique / numérique ou un amplificateur faible bruit ou un module de conversion en fréquence.

Dans un mode particulier de mise en oeuvre, le satellite est un satellite de télécommunications ou d'observation de signaux artificiels émis depuis la Terre, et chaque antenne de réception est une antenne de réception d'une charge utile de télécommunications ou d'observation dudit satellite.

De telles dispositions permettent d'avoir un satellite de télécommunications ou d'observation pour lequel le surcoût lié à l'estimation de direction d'arrivée est réduit. En effet, il n'est pas nécessaire d'ajouter d'antenne de réception pour fournir le signal de référence puisque la ou les antennes de réception de la charge utile de télécommunications ou d'observation sont mises en oeuvre à la fois pour leur mission de télécommunications ou d'observation, mais également pour fournir le signal de référence utilisé pour estimer la direction d'arrivée du signal cible. Sur un tel satellite, il suffira donc d'ajouter le réseau d'antennes de mesure, lesdites antennes de mesure pouvant être peu directives et peu encombrantes du fait du gain de traitement introduit par la combinaison des signaux de mesure avec le signal de référence.

Selon un second aspect, l'invention concerne un procédé d'estimation d'une position d'un émetteur sensiblement à la surface de la Terre, dans lequel la position dudit émetteur est estimée en fonction notamment d'une direction d'arrivée estimée, pour un signal cible émis par ledit émetteur, conformément à un procédé d'estimation selon l'invention.

Selon un troisième aspect, l'invention concerne un procédé d'estimation d'une attitude d'un satellite, ledit satellite comportant au moins une première antenne de mesure, une seconde antenne de mesure et une antenne de réception de gain maximal supérieur aux gains maximaux respectifs de ladite première antenne de mesure et de ladite seconde antenne de mesure. L'attitude du satellite est estimée en fonction notamment d'une direction d'arrivée estimée, pour un signal cible émis par un émetteur de position connue par rapport au satellite, conformément à un procédé d'estimation de direction d'arrivée selon l'invention.

Selon un quatrième aspect, l'invention concerne un produit programme d'ordinateur comportant un ensemble d'instructions de code de programme qui, lorsqu'elles sont exécutées par un processeur, mettent en oeuvre un procédé d'estimation de direction d'arrivée selon l'invention.

Selon un cinquième aspect, l'invention concerne un système d'estimation d'une direction d'arrivée d'un signal cible par rapport à un réseau d'antennes de mesure d'un satellite en orbite terrestre, ladite direction d'arrivée du signal cible étant estimée en fonction de signaux, dits « signaux de mesure », correspondant au signal cible reçu par respectivement au moins une première antenne de mesure et une seconde antenne de mesure dudit réseau d'antennes de mesure. Ledit système comporte en outre :

- des moyens de combinaison adaptés à combiner chacun des signaux de mesure avec un signal, dit «signal de référence », correspondant au signal cible reçu par une antenne de réception du satellite, ladite antenne de réception étant de gain maximal supérieur aux gains maximaux respectifs de la première antenne de mesure et de la seconde antenne de mesure,
- des moyens d'estimation adaptés à estimer la direction d'arrivée du signal cible à partir des signaux obtenus par combinaison de chacun desdits signaux de mesure avec le signal de référence.

Dans des modes particuliers de réalisation, le système d'estimation de direction d'arrivée peut comporter en outre l'une ou plusieurs des caractéristiques suivantes, prises isolément ou selon toutes les combinaisons techniquement possibles.

Dans un mode particulier de réalisation, le satellite comporte plusieurs antennes de réception desservant différentes zones géographiques de la Terre, chaque antenne de réception étant de gain maximal supérieur aux gains maximaux respectifs de la première antenne de mesure et de la seconde antenne de mesure, et ladite première antenne de mesure et ladite seconde antenne de mesure desservent toutes les zones géographiques desservies par les différentes antennes de réception.

Dans un mode particulier de réalisation, le satellite comporte des chaînes de traitement des signaux de mesure, lesdites chaînes de traitement comportant au moins une ressource matérielle partagée mise en oeuvre pour traiter à la fois le signal de mesure de la première antenne de mesure et le signal de mesure de la seconde antenne de mesure au cours d'intervalles de temps respectifs différents.

Dans un mode particulier de réalisation, au moins une ressource matérielle partagée des chaînes de traitement du satellite est un convertisseur analogique / numérique ou un amplificateur faible bruit ou un module de conversion en fréquence.

Dans un mode particulier de réalisation, le satellite est un satellite de télécommunications ou d'observation de signaux artificiels émis depuis la Terre, et chaque antenne de réception est une antenne de réception d'une charge utile de télécommunications ou d'observation dudit satellite, de préférence une charge utile adaptée à recevoir des signaux AIS, GNSS ou ADS-B, ou de tout autre signal artificiel émis depuis la Terre (radar, etc.).

Dans un mode particulier de réalisation, le satellite est en orbite géostationnaire, et la première antenne de mesure et la seconde antenne de mesure présentent chacune un champ de vue de largeur supérieure à 3°, de préférence supérieure à 10°.

**PRÉSENTATION DES FIGURES**

L'invention sera mieux comprise à la lecture de la description suivante, donnée à titre d'exemple nullement limitatif, et faite en se référant aux figures qui représentent :

- Figure 1: une représentation schématique d'un système d'estimation de direction d'arrivée selon un exemple de réalisation,
- Figure 2 : un diagramme illustrant les principales étapes d'un procédé d'estimation de direction d'arrivée selon l'invention,
- Figure 3 : un diagramme illustrant un exemple de mise en oeuvre d'un procédé d'estimation de direction d'arrivée,
- Figure 4 : une représentation schématique partielle d'un exemple de réalisation d'un satellite d'un système d'estimation de direction d'arrivée.

Dans ces figures, des références identiques d'une figure à une autre désignent des éléments identiques ou analogues. Pour des raisons de clarté, les éléments représentés ne sont pas à l'échelle, sauf mention contraire.

**DESCRIPTION DÉTAILLÉE DE MODES DE RÉALISATION**

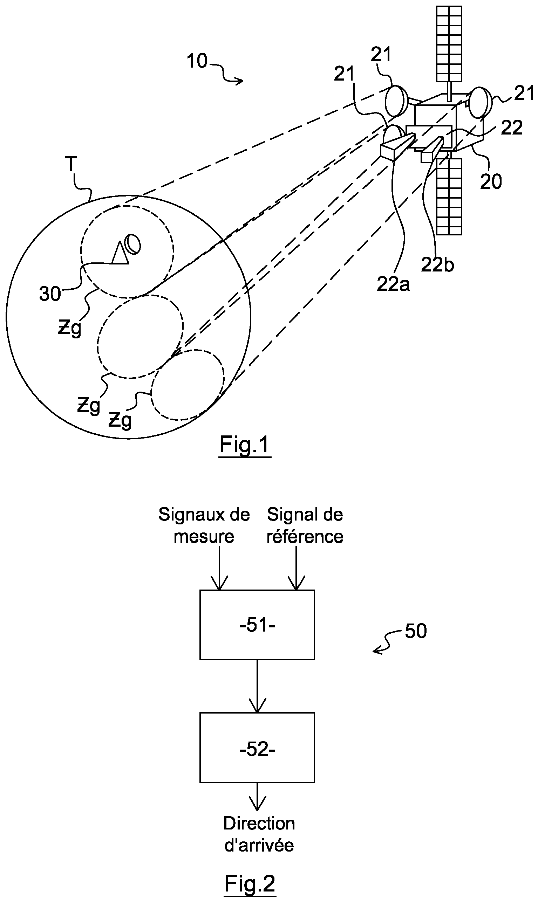

La figure 1 représente schématiquement un exemple de réalisation d'un système 10 d'estimation de direction d'arrivée d'un signal cible, comportant un satellite 20 en orbite terrestre.

Dans la suite de la description, on se place de manière non limitative dans le cas où le satellite 20 est un satellite de télécommunications en orbite géostationnaire. Rien n'exclut, suivant d'autres exemples, de considérer d'autres types de satellites (par exemple d'observation de signaux artificiels émis depuis la Terre) et/ou d'autres types d'orbites (LEO, MEO, etc.).

Le satellite 20 comporte une charge utile de télécommunications comportant notamment plusieurs antennes de réception 21 desservant différentes zones géographiques Zg à la surface de la Terre T.

La charge utile de télécommunications est par exemple adaptée à recevoir des signaux AIS (« Advanced Identification System »), GNSS (« Global Navigation Satellite System »), ADS-B (« Automatic Dependent Surveillance-Broadcast »), etc. La charge utile de télécommunications du satellite 20 peut être transparente ou régénérative, ou encore limitée à une fonction de réception sans capacité de répétition vers la Terre.

Dans le contexte de l'invention, la direction d'arrivée d'un signal cible est estimée en fonction de signaux, dits « signaux de mesure », correspondant au signal cible émis depuis la Terre et reçu par un réseau 22 d'antennes de mesure, distinctes des antennes de réception 21 du satellite 20. La direction d'arrivée est donc estimée par rapport audit réseau d'antennes de mesure, qui comporte au moins une première antenne de mesure 22a et une seconde antenne de mesure 22b.

Le signal cible peut être tout type de signal, y compris un signal d'interférence qui perturbe la mission de télécommunications du satellite 20, ou un signal utile correspondant à un signal de télécommunications, un signal de calibration, un signal émis par un émetteur de position connue (afin notamment d'estimer l'attitude du satellite), etc.

De manière connue, la direction d'arrivée d'un signal cible par rapport aux première et seconde antennes de mesure 22a, 22b est par exemple estimée en fonction d'une estimation de la différence de phase entre les signaux de mesure. Une telle estimation de la différence de phase, dite « mesure interférométrique », permet de déterminer une différence de marche entre des trajets parcourus par le signal cible pour arriver sur respectivement la première antenne de mesure 22a et la seconde antenne de mesure 22b, qui peut à son tour être utilisée pour estimer la direction d'arrivée du signal cible.

Il est à noter que l'estimation de la différence de marche au moyen de l'estimation de la différence de phase peut s'avérer ambiguë, dans la mesure où la phase est estimée modulo $2\pi$. Toutefois, cette ambiguïté peut être levée par des moyens qui sortent du cadre de l'invention et qui sont considérés comme connus de l'homme de l'art.

La direction d'arrivée du signal cible par rapport aux première et seconde antennes de mesure 22a, 22b peut également être estimée, à partir des signaux de mesure, en appliquant des algorithmes plus complexes, mieux adaptés aux scénarios dans lesquels plusieurs signaux, dont le signal cible, sont reçus par le réseau 22 d'antennes de mesure. On peut citer, à titre d'exemples non limitatifs, les algorithmes suivants :

- MUSIC (voir par exemple : « Multiple Emitter Location and Signal Parameter Estimation », R. O. Schmidt, IEEE Transactions on Antennas and Propagation, Vol. 34, N°3, Mars 1986),
- ESPRIT (voir par exemple « ESPRIT : Estimation of Signal Parameters via Rotational Invariance Techniques », R.

Roy et al., IEEE Transactions on Acoustics, Speech and Signal Processing, Vol. 37, N°7, Juillet 1989).

Dans l'exemple illustré par la figure 1, le satellite 20 comporte uniquement deux antennes de mesure, en l'occurrence la première antenne de mesure 22a et la seconde antenne de mesure 22b. Rien n'exclut, suivant d'autres exemples, de considérer davantage que deux antennes de mesure. En particulier, il est avantageux de considérer au moins trois antennes de mesure non toutes alignées si l'on souhaite pouvoir estimer une direction 3D d'arrivée du signal cible dans un repère associé au satellite 20.

Avantageusement, chaque antenne de réception 21 est de gain maximal supérieur aux gains maximaux respectifs de la première antenne de mesure 22a et de la seconde antenne de mesure 22b. Les antennes de réception 21 sont donc plus directives que les première et seconde antennes de mesure 22a, 22b. Chacune des première et seconde antennes de mesure 22a, 22b dessert donc une zone géographique plus grande que celle desservie par une antenne de réception 21. Le gain maximal de chaque antenne de réception est par exemple supérieur d'au moins 3 décibels (dB) aux gains maximaux des première et seconde antennes de mesure 22a, 22b. Dans des modes préférés de réalisation, ledit gain maximal de chaque antenne de réception est supérieur d'au moins 10 décibels (dB) auxdits gains maximaux des première et seconde antennes de mesure 22a, 22b.

Dans un mode préféré de réalisation, chacune des première et seconde antennes de mesure 22a, 22b dessert toutes les zones géographiques desservies par les différentes antennes de réception 21 du satellite 20. Ainsi, les première et seconde antennes de mesure 22a, 22b peuvent être mises en oeuvre pour estimer la direction d'arrivée d'un signal cible provenant de l'une quelconque des zones géographiques desservies par les différentes antennes de réception 21 du satellite 20. Par exemple, la première antenne de mesure 22a et la seconde antenne de mesure 22b présentent chacune un champ de vue de largeur supérieure à 3°, voire supérieure à 10°. Le champ de vue des première et seconde antennes de mesure 22a, 22b est par exemple de largeur sensiblement égale à 17° de sorte à couvrir simultanément toute la surface terrestre visible depuis un satellite en orbite géostationnaire.

De manière générale, les principales étapes d'un procédé 50 d'estimation de direction d'arrivée selon l'invention, illustrées par la figure 2, sont les suivantes :

- 51 combinaison de chacun des signaux de mesure avec un signal, dit « signal de référence », correspondant au signal cible reçu par une des antennes de réception 21 du satellite 20,
- 52 estimation de la direction d'arrivée du signal cible à partir des signaux obtenus par combinaison de chacun desdits signaux de mesure avec le signal de référence.

En pratique, lorsque le signal cible correspond à un signal d'interférence, l'antenne de réception 21 considérée correspondra par exemple à l'antenne de réception 21 ayant permis de détecter ledit signal d'interférence. Si plusieurs antennes de réception 21 permettent la détection dudit signal d'interférence, on pourra par exemple considérer celle présentant le niveau le plus élevé de réception dudit signal d'interférence.

Dans un contexte d'estimation d'attitude du satellite 20, plusieurs signaux cibles pourront être considérés, émis par différents émetteurs de positions connues, se trouvant de préférence dans des zones géographiques respectives différentes. Ainsi, pour chaque signal cible dont on cherche à estimer la direction d'arrivée, on utilisera l'antenne de réception 21 par laquelle ledit signal cible est reçu, c'est-à-dire l'antenne de réception 21 desservant la zone géographique dans laquelle se trouve l'émetteur dudit signal cible.

Le système 10 d'estimation de direction d'arrivée comporte en outre des moyens configurés pour exécuter les étapes du procédé 50 d'estimation de direction d'arrivée. Par conséquent, il comporte notamment :

- des moyens de combinaison adaptés à combiner chacun des signaux de mesure avec le signal de référence,
- des moyens d'estimation adaptés à estimer la direction d'arrivée du signal cible à partir des signaux obtenus par combinaison de chacun desdits signaux de mesure avec le signal de référence.

Il est à noter que les moyens de combinaison et les moyens d'estimation peuvent être entièrement embarqués dans le satellite 20, entièrement intégrés dans une station sol 30, ou encore distribués entre ledit satellite 20 et ladite station sol 30.

Dans la suite de la description, on se place de manière non limitative dans le cas où les moyens de combinaison et les moyens d'estimation sont entièrement intégrés dans la station sol 30. Dans un tel cas, le satellite 20 comporte des moyens de réémission du signal de référence et des signaux de mesure reçus, à destination de la station sol 30. Plusieurs configurations sont possibles au niveau du satellite 20, suivant que des versions analogiques et/ou numériques du signal de référence et des signaux de mesure sont transmises à la station sol 30. Par exemple :

- une version analogique du signal de référence (satellite 20 transparent ou régénératif) et des versions analogiques des signaux de mesure sont transmises à la station sol 30,

- une version analogique du signal de référence et des versions numériques des signaux de mesure (numérisation à bord des signaux de mesure) sont transmises à la station sol 30,
- une version numérique du signal de référence (numérisation à bord du signal de référence) et des versions numériques des signaux de mesure sont transmises à la station sol 30.

Au niveau de la station sol 30, les moyens de combinaison et les moyens d'estimation se présentent par exemple sous la forme d'un processeur et d'une mémoire électronique dans laquelle est mémorisé un produit programme d'ordinateur. Le produit programme d'ordinateur se présente sous la forme d'un ensemble d'instructions de code de programme qui, lorsqu'elles sont exécutées par le processeur, mettent en oeuvre tout ou partie des étapes du procédé 50 d'estimation de direction d'arrivée. Dans une variante, les moyens de combinaison et/ou les moyens d'estimation comportent des circuits logiques programmables, de type FPGA, PLD, etc., et/ou des circuits intégrés spécialisés (ASIC), adaptés à mettre en oeuvre tout ou partie des étapes dudit procédé 50 d'estimation de direction d'arrivée.

Diverses combinaisons des signaux de mesure avec le signal de référence peuvent être envisagées.

Dans un mode préféré de mise en oeuvre, la combinaison du signal de référence avec un signal de mesure comporte un calcul de corrélation dudit signal de référence avec ledit signal de mesure. De manière connue, le signal obtenu après combinaison est alors représentatif de la différence de phase entre le signal cible tel que reçu par l'antenne de réception 21 et le signal cible tel que reçu par l'antenne de mesure considérée. Ainsi, à l'issue de l'étape 51 de combinaison, on dispose de deux signaux représentatifs de :

- la différence de phase $\Delta\varphi_{REF1} = \varphi_{REF} - \varphi_1$ entre la phase $\varphi_{REF}$ du signal de référence et la phase $\varphi_1$ du signal de mesure de la première antenne de mesure 22a,
- la différence de phase $\Delta\varphi_{REF2} = \varphi_{REF} - \varphi_2$ entre la phase $\varphi_{REF}$ du signal de référence et la phase $\varphi_2$ du signal de mesure de la seconde antenne de mesure 22b.

Ensuite, l'étape 52 d'estimation de la direction d'arrivée comporte par exemple des sous-étapes (non illustrées par des figures) de :

- estimation de la différence de phase entre les signaux obtenus après combinaison,
- estimation de la direction d'arrivée à partir de la différence de phase entre les signaux obtenus après combinaison.

Au cours de la sous-étape d'estimation de la différence de phase entre les signaux de mesure, on calcule par exemple la corrélation entre :

- le signal obtenu par combinaison du signal de référence avec le signal de mesure de la première antenne de mesure 22a, et
- le signal obtenu par combinaison dudit signal de référence avec le signal de mesure de la seconde antenne de mesure 22b.

On calcule ensuite l'argument du résultat du calcul de corrélation, qui correspond à l'estimation de la différence de phase entre lesdits signaux obtenus par combinaison. Ainsi, à l'issue de la sous-étape d'estimation de la différence de phase entre les signaux obtenus après combinaison, on dispose donc d'une estimation de la différence :

$$\Delta\varphi_{REF1} - \Delta\varphi_{REF2} = \varphi_{REF} - \varphi_1 - \varphi_{REF} + \varphi_2 = \varphi_2 - \varphi_1$$

c'est-à-dire une estimation de la différence de phase $\Delta\varphi_{21}$ entre la phase $\varphi_2$ du signal de mesure de la seconde antenne de mesure 22b et la phase $\varphi_1$ du signal de mesure de la première antenne de mesure 22a.

Il est à noter que, en considérant des première et seconde antennes de mesure 22a, 22b peu directives (par exemple présentant une largeur angulaire de 17° pour un satellite 20 en orbite géo stationnaire), il serait en pratique très difficile d'estimer directement la différence de phase $\Delta\varphi_{21}$ sans passer par la combinaison avec le signal de référence. En effet, le rapport signal cible sur bruit, dans chacun des signaux de mesure, serait le plus souvent trop faible du fait d'un faible gain maximal de chacune desdites première et seconde antennes de mesure 22a, 22b. La combinaison avec le signal de référence, qui présente un bien meilleur rapport signal cible sur bruit, permet d'introduire un gain de traitement. Ainsi, il est possible d'estimer les différences de phase $\Delta\varphi_{REF1}$ et $\Delta\varphi_{REF2}$, et ensuite d'estimer la différence de phase $\Delta\varphi_{21}$ avec un meilleur rapport signal cible sur bruit qu'en ne considérant que les signaux de mesure des première et seconde antennes de mesure.

L'estimation de la direction d'arrivée, à partir de l'estimation de la différence de phase entre les signaux de mesure, peut être réalisée de manière conventionnelle, en mettant en oeuvre des procédés considérés comme connus de l'homme de l'art. Tel qu'indiqué précédemment, l'estimation de la différence de phase étant effectuée modulo $2\pi$, il peut s'avérer nécessaire de lever l'ambiguïté résiduelle, en mettant en oeuvre des procédés qui sont également considérés comme connus de l'homme de l'art.

Dans un mode particulier de mise en oeuvre, pouvant être considéré seul ou en combinaison avec l'un quelconque des modes de mise en oeuvre précédemment décrits, il est possible d'estimer, au cours de l'étape 51 de combinaison, la différence de phase $\Delta\varphi_{REF1}$ et la différence de phase $\Delta\varphi_{REF2}$. A partir de ces différences de phase $\Delta\varphi_{REF1}$ et $\Delta\varphi_{REF2}$, il est possible d'estimer les différences de marche entre respectivement :

- les trajets parcourus par le signal cible pour arriver sur l'antenne de réception 21 et la première antenne de mesure 22a,
- les trajets parcourus par le signal cible pour arriver sur l'antenne de réception 21 et la seconde antenne de mesure 22b.

Ces différences de marche peuvent alors être utilisées pour estimer la direction d'arrivée du signal cible (direction 3D si l'antenne de réception 21 et les première et seconde antennes de mesures ne sont pas alignées).

Dans un mode de mise en oeuvre alternatif, la direction d'arrivée du signal cible peut être estimée directement à partir des signaux obtenus après combinaison, en mettant en oeuvre des algorithmes tels que MUSIC ou ESPRIT, considérés comme connus de l'homme de l'art. Il est à noter que de tels algorithmes peuvent être mis en oeuvre pour traiter simultanément davantage que deux signaux obtenus après combinaison. Ainsi, dans le cas d'un réseau 22 comportant Nr antennes de mesure, Nr étant égal ou supérieur à 3, la direction d'arrivée du signal cible peut être estimée directement à partir des Nr signaux obtenus après combinaison des différents signaux de mesure avec le signal de référence.

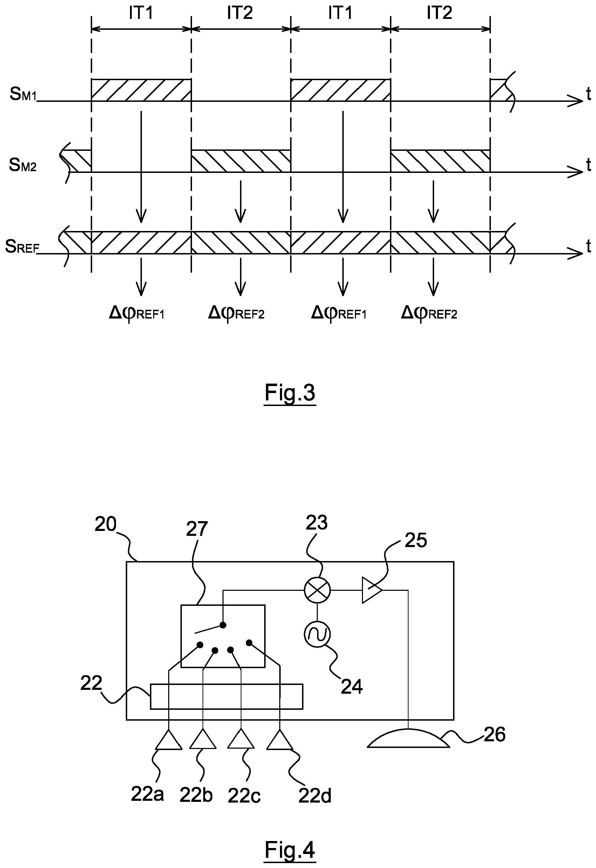

La figure 3 représente un mode préféré de mise en oeuvre d'un procédé 50 d'estimation de direction d'arrivée, dans lequel, au cours de l'étape 51 de combinaison :

- une première combinaison est calculée entre le signal de référence et le signal de mesure reçus par respectivement l'antenne de réception 21 et la première antenne de mesure 22a au cours d'un premier intervalle de temps IT1,
- une seconde combinaison est calculée entre le signal de référence et le signal de mesure reçus par respectivement l'antenne de réception 21 et la seconde antenne de mesure 22b au cours d'un second intervalle de temps IT2, distinct dudit premier intervalle de temps IT1.

Ainsi le signal représentatif de la différence de phase $\Delta\varphi_{REF1}$ est obtenu par combinaison du signal de référence (désigné par $S_{REF}$ sur la figure 3) reçu au cours du premier intervalle de temps IT1 avec le signal de mesure de la première antenne de mesure 22a (désigné par $S_{M1}$ sur la figure 3) reçu au cours du même premier intervalle de temps IT1.

Le signal représentatif de la différence de phase $\Delta\varphi_{REF2}$ est obtenu par combinaison du signal de référence $S_{REF}$ reçu au cours du second intervalle de temps IT2 avec le signal de mesure de la seconde antenne de mesure 22b (désigné par $S_{M2}$ sur la figure 3) reçu au cours du même second intervalle de temps IT2.

Ensuite, la direction d'arrivée du signal cible est estimée tel que décrit précédemment en utilisant la première combinaison et la seconde combinaison, représentatives des différences de phase respectivement $\Delta\varphi_{REF1}$ et $\Delta\varphi_{REF2}$.

On comprend donc que, dans l'exemple illustré par la figure 3 et grâce à l'utilisation du signal de référence $S_{REF}$, l'estimation de la direction d'arrivée du signal cible ne nécessite pas de disposer :

- du signal de mesure $S_{M1}$ reçu par la première antenne de mesure 22a au cours du second intervalle de temps IT2,
- du signal de mesure $S_{M2}$ reçu par la seconde antenne de mesure 22b au cours du premier intervalle de temps IT1.

Ainsi, il est possible de réduire le coût du système 10 d'estimation de direction d'arrivée grâce à une mise en commun de certaines ressources matérielles. En effet, dans certains cas, les mêmes ressources matérielles pourront être utilisées à la fois pour le signal de mesure $S_{M1}$ et pour le signal de mesure $S_{M2}$, au cours d'intervalles de temps respectifs différents.

La figure 4 représente schématiquement un mode préféré de réalisation d'un satellite 20 d'un système 10 d'estimation de direction d'arrivée. La figure 4 est une représentation partielle du satellite 20 et, notamment, les antennes de réception 21 de la charge utile de télécommunications dudit satellite ne sont pas représentées.

Dans le mode de réalisation illustré par la figure 4, on se place dans le cas où l'estimation de la direction d'arrivée est calculée par la station sol 30.

Par conséquent, le satellite 20 comporte des moyens d'émission adaptés à émettre les signaux de mesure, reçus par le réseau 22 d'antennes de mesure, à destination de la station sol 30. Lesdits moyens d'émission comportent par exemple :

- un mélangeur 23 et un oscillateur local 24 adaptés à translater fréquentiellement les signaux de mesure,
- un amplificateur de puissance 25,
- une antenne d'émission 26.

Tel qu'illustré par la figure 4, lesdits moyens d'émission sont partagés entre les différentes antennes de mesure du réseau 22 d'antennes de mesure, au moyen d'un commutateur 27 adapté à connecter chacune à leur tour les sorties desdites antennes de mesure aux moyens d'émission. Dans l'exemple illustré par la figure 4, le réseau 22 d'antennes de mesure comporte quatre antennes de mesure 22a, 22b, 22c et 22d. Au cours d'un premier intervalle de temps IT1, seule la sortie de la première antenne de mesure 22a est connectée aux moyens d'émission, au cours d'un second intervalle de temps IT2, seule la sortie de la seconde antenne de mesure 22b est connectée aux moyens d'émission, etc.

D'autres ressources matérielles peuvent être partagées entre les différentes antennes de mesure, en alternative ou en combinaison avec lesdits moyens d'émission.

De manière plus générale, au moins une ressource matérielle de chaînes de traitement des signaux de mesure à bord du satellite 20 est, dans des modes préférés de réalisation, partagée entre les différentes antennes de mesure du réseau 22 d'antennes de mesure. En d'autres termes, au moins une ressource matérielle desdites chaînes de traitement est utilisée pour traiter des signaux de mesure de différentes antennes de mesure du réseau 22 d'antennes de mesure, au cours d'intervalles de temps respectifs différents. Suivant un exemple non limitatif, la numérisation des signaux de mesure étant effectuée à bord du satellite 20, un même convertisseur analogique / numérique est mis en oeuvre pour numériser les signaux de mesure de différentes antennes de mesure au cours d'intervalles de temps respectifs différents. Suivant un autre exemple non limitatif, un même amplificateur faible bruit (« Low Noise Amplifier » ou LNA), est mis en oeuvre pour amplifier, avant numérisation, les différents signaux de mesure au cours d'intervalles de temps respectifs différents. Suivant un autre exemple non limitatif, un même module de conversion en fréquence (par exemple un ensemble comprenant un oscillateur local, un mélangeur et un filtre), est mis en oeuvre pour translater en fréquence les différents signaux de mesure au cours d'intervalles de temps respectifs différents.

Il est en outre à noter que le fait de ne transmettre, du satellite 20 vers la station sol 30, que des portions des différents signaux de mesure, reçus au cours d'intervalles de temps respectifs différents, permet de réduire la bande passante requise pour cette transmission.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant plusieurs antennes de réception 21 desservant des zones géographiques différentes de la Terre. Rien n'exclut, suivant d'autres exemples, de considérer une seule antenne de réception, par exemple montée mobile, pouvant être dirigée successivement vers chacune desdites zones géographiques. Une telle solution peut être envisagée notamment si l'antenne de réception 21 est dédiée à l'estimation de direction d'arrivée (et n'est donc pas une antenne de réception 21 d'une charge utile de télécommunications du satellite 20).

La description ci-avant illustre clairement que par ses différentes caractéristiques et leurs avantages, la présente invention atteint les objectifs qu'elle s'était fixés. En particulier, on comprend que, grâce à la combinaison avec le signal de référence, reçu par une antenne de réception 21 directive et présentant un bon rapport signal cible sur bruit, les dimensions des antennes de mesure peuvent être réduites. En outre, il est possible de réutiliser une ou plusieurs antennes de réception 21 directives d'une charge utile de télécommunications, celles-ci étant alors avantageusement utilisées à la fois pour leur mission de télécommunications et pour une mission supplémentaire d'estimation de direction d'arrivée.

L'estimation de direction d'arrivée trouve de nombreuses applications.

En particulier, il est possible d'estimer la position d'un émetteur sensiblement à la surface de la Terre, tel qu'un interféreur. En effet, si la position du satellite 20 et son attitude sont connues dans un repère associé à la Terre, la connaissance de la direction d'arrivée du signal d'interférence émis par ledit interféreur permettra d'en déterminer la position.

En outre, il est possible d'estimer l'attitude du satellite 20. En effet, si la position du satellite 20 est connue, la connaissance des directions d'arrivée de signaux cibles émis par un ou plusieurs émetteurs de position connue permettra d'estimer l'attitude.

### Revendications

1. Procédé (50) d'estimation d'une direction d'arrivée d'un signal cible par rapport à un réseau (22) d'antennes de mesure d'un satellite (20) en orbite terrestre, ladite direction d'arrivée du signal cible étant estimée en fonction de signaux, dits signaux de mesure, correspondant au signal cible reçu par respectivement au moins une première antenne de mesure (22a) et une seconde antenne de mesure (22b) dudit réseau (22) d'antennes de mesure, **caractérisé en ce que** le procédé (50) comporte des étapes de :

(51) combinaison de chacun des signaux de mesure avec un signal, dit signal de référence, correspondant au signal cible reçu par une antenne de réception (21) du satellite (20), ladite antenne de réception étant de gain maximal supérieur aux gains maximaux respectifs de la première antenne de mesure (22a) et de la seconde antenne de mesure (22b),

(52) estimation de la direction d'arrivée du signal cible à partir des signaux obtenus par combinaison de chacun desdits signaux de mesure avec le signal de référence.

2. Procédé (50) selon la revendication 1, **caractérisé en ce que**, le satellite (20) comportant plusieurs antennes de réception (21) desservant différentes zones géographiques (Zg) de la Terre (T), chaque antenne de réception (21) étant de gain maximal supérieur aux gains maximaux respectifs de la première antenne de mesure (22a) et de la seconde antenne de mesure (22b), ledit procédé comporte la détermination de l'antenne de réception (21) par laquelle le signal cible est reçu, le signal reçu par l'antenne de réception déterminée étant utilisé comme signal de référence au cours de l'étape (51) de combinaison.

3. Procédé (50) selon l'une des revendications précédentes, **caractérisé en ce que**, au cours de l'étape (51) de combinaison :

une première combinaison est calculée entre le signal de référence et le signal de mesure reçus par respectivement l'antenne de réception (21) et la première antenne de mesure (22a) au cours d'un premier intervalle de temps,
une seconde combinaison est calculée entre le signal de référence et le signal de mesure reçus par respectivement l'antenne de réception (21) et la seconde antenne de mesure (22b) au cours d'un second intervalle de temps distinct du premier intervalle de temps,

la direction d'arrivée du signal cible étant estimée en fonction au moins de ladite première combinaison et de ladite seconde combinaison.

4. Procédé (50) selon la revendication 3, **caractérisé en ce que** au moins une ressource matérielle de chaînes de traitement des signaux de mesure à bord du satellite (20) est mise en oeuvre pour traiter à la fois le signal de mesure de la première antenne de mesure (22a) et le signal de mesure de la seconde antenne de mesure (22b) au cours d'intervalles de temps respectifs différents.

5. Procédé (50) selon la revendication 4, **caractérisé en ce qu'**au moins une ressource matérielle mise en oeuvre pour traiter à la fois le signal de mesure de la première antenne de mesure (22a) et le signal de mesure de la seconde antenne de mesure (22b) au cours d'intervalles de temps respectifs différents est un convertisseur analogique / numérique ou un amplificateur faible bruit ou un module de conversion en fréquence.

6. Procédé (50) selon l'une des revendications précédentes, **caractérisé en ce que** le signal cible est un signal intermittent et/ou un signal de fréquence variable au cours du temps.

7. Procédé d'estimation d'une position d'un émetteur sensiblement à la surface de la Terre, **caractérisé en ce que** la position dudit émetteur est estimée en fonction d'une direction d'arrivée estimée, pour un signal cible émis par ledit émetteur, conformément à l'une des revendications 1 à 6.

8. Procédé d'estimation d'une attitude d'un satellite (20) en orbite terrestre, ledit satellite comportant au moins une première antenne de mesure (22a), une seconde antenne de mesure (22b) et une antenne de réception (21) de gain maximal supérieur aux gains maximaux respectifs de ladite première antenne de mesure et de ladite seconde antenne de mesure, **caractérisé en ce que** l'attitude du satellite (20) est estimée en fonction d'une direction d'arrivée estimée, pour un signal cible émis par un émetteur de position connue par rapport au satellite (20), conformément à l'une des revendications 1 à 6.

9. Produit programme d'ordinateur, **caractérisé en ce qu'**il comporte un ensemble d'instructions de code de programme qui, lorsqu'elles sont exécutées par un processeur, mettent en oeuvre un procédé (50) d'estimation de direction d'arrivée selon l'une des revendications 1 à 6.

10. Système (10) d'estimation d'une direction d'arrivée d'un signal cible par rapport à un réseau (20) d'antennes de mesure d'un satellite (20) en orbite terrestre, ladite direction d'arrivée du signal cible étant estimée en fonction de signaux, dits signaux de mesure, correspondant au signal cible reçu par respectivement au moins une première antenne de mesure (22a) et une seconde antenne de mesure (22b) dudit réseau (20) d'antennes de mesure, **caractérisé en ce que** le système (10) comporte en outre :

des moyens de combinaison adaptés à combiner chacun des signaux de mesure avec un signal, dit signal de référence, correspondant au signal cible reçu par une antenne de réception (21) du satellite (20), ladite antenne de réception étant de gain maximal supérieur aux gains maximaux respectifs de la première antenne de mesure (22a) et de la seconde antenne de mesure (22b),
des moyens d'estimation adaptés à estimer la direction d'arrivée du signal cible à partir des signaux obtenus par combinaison de chacun desdits signaux de mesure avec le signal de référence.

**11.** Système (10) selon la revendication 10, **caractérisé en ce que** le satellite (20) comporte plusieurs antennes de réception (21) desservant différentes zones géographiques (Zg) de la Terre (T), chaque antenne de réception (21) étant de gain maximal supérieur aux gains maximaux respectifs de la première antenne de mesure (22a) et de la seconde antenne de mesure (22b), ladite première antenne de mesure et ladite seconde antenne de mesure desservant toutes les zones géographiques desservies par les différentes antennes de réception (21).

**12.** Système (10) selon la revendication 10 ou 11, **caractérisé en ce que** le satellite (20) comporte des chaînes de traitement des signaux de mesure, lesdites chaînes de traitement comportant au moins une ressource matérielle partagée mise en oeuvre pour traiter à la fois le signal de mesure de la première antenne de mesure (22a) et le signal de mesure de la seconde antenne de mesure (22b) au cours d'intervalles de temps respectifs différents.

**13.** Système (10) selon la revendication 12, **caractérisé en ce qu'**au moins une ressource matérielle partagée des chaînes de traitement du satellite (20) est un convertisseur analogique / numérique ou un amplificateur faible bruit ou un module de conversion en fréquence.

**14.** Système (10) selon l'une des revendications 10 à 13, **caractérisé en ce que** le satellite (20) est un satellite de télécommunications ou d'observation de signaux artificiels émis depuis la Terre, et chaque antenne de réception (21) est une antenne de réception d'une charge utile de télécommunications ou d'observation dudit satellite (20).

**15.** Système (10) selon l'une des revendications 10 à 14, **caractérisé en ce que** le satellite (20) est en orbite géostationnaire, et **en ce que** la première antenne de mesure (22a) et la seconde antenne de mesure (22b) présentent chacune un champ de vue de largeur supérieure à 3°, de préférence supérieure à 10°.

**Patentansprüche**

**1.** Verfahren (50) zur Schätzung einer Einfallsrichtung eines Zielsignals relativ zu einem Netz (22) von Messantennen eines Satelliten (20) in einer Erdumlaufbahn, wobei die Einfallsrichtung des Zielsignals in Abhängigkeit von "Messsignale" genannten Signalen geschätzt wird, die dem Zielsignal entsprechen, das durch wenigstens eine erste Messantenne (22a) bzw. eine zweite Messantenne (22b) des Netzes (22) von Messantennen empfangen wird, **dadurch gekennzeichnet, dass** das Verfahren (50) die folgenden Schritte umfasst:

(51) Kombinieren jedes der Messsignale mit einem "Referenzsignal" genannten Signal, das dem Zielsignal entspricht, das durch eine Empfangsantenne (21) des Satelliten (20) empfangen wird, wobei die Empfangsantenne einen maximalen Gewinn aufweist, der höher als der jeweilige maximale Gewinn der ersten Messantenne (22a) und der zweiten Messantenne (22b) ist,
(52) Schätzen der Einfallsrichtung des Zielsignals ausgehend von Signalen, die durch Kombination jedes der Messsignale mit dem Referenzsignal erhalten wurden.

**2.** Verfahren (50) nach Anspruch 1, **dadurch gekennzeichnet, dass** der Satellit (20) mehrere Empfangsantennen (21) aufweist, die verschiedene geographische Gebiete (Zg) der Erde (T) abdecken, wobei jede Empfangsantenne (21) einen maximalen Gewinn aufweist, der höher als der jeweilige maximale Gewinn der ersten Messantenne (22a) und der zweiten Messantenne (22b) ist, wobei das Verfahren die Bestimmung der Empfangsantenne (21) beinhaltet, durch welche das Zielsignal empfangen wird, wobei das Signal, das durch die bestimmte Empfangsantenne empfangen wird, im Schritt (51) des Kombinierens als Referenzsignal verwendet wird.

**3.** Verfahren (50) nach einem der vorhergehenden Ansprüche, **dadurch gekennzeichnet, dass** im Schritt (51) des Kombinierens:

eine erste Kombination des Referenzsignals und des Messsignals berechnet wird, die durch die Empfangsantenne (21) bzw. die erste Messantenne (22a) in einem ersten Zeitintervall empfangen werden,
eine zweite Kombination des Referenzsignals und des Messsignals berechnet wird, die durch die Empfangsantenne (21) bzw. die zweite Messantenne (22b) in einem zweiten Zeitintervall, das von dem ersten Zeitintervall verschieden ist, empfangen werden,

wobei die Einfallsrichtung des Zielsignals in Abhängigkeit wenigstens von der ersten Kombination und der zweiten Kombination geschätzt wird.

4. Verfahren (50) nach Anspruch 3, **dadurch gekennzeichnet, dass** wenigstens eine Hardware-Ressource von Ketten zur Verarbeitung der Messsignale an Bord des Satelliten (20) eingesetzt wird, um das Messsignal der ersten Messantenne (22a) und das Messsignal der zweiten Messantenne (22b) in verschiedenen jeweiligen Zeitintervallen auf einmal zu verarbeiten.

5. Verfahren (50) nach Anspruch 4, **dadurch gekennzeichnet, dass** wenigstens eine Hardware-Ressource, die eingesetzt wird, um das Messsignal der ersten Messantenne (22a) und das Messsignal der zweiten Messantenne (22b) in verschiedenen jeweiligen Zeitintervallen auf einmal zu verarbeiten, ein Analog-Digital-Umsetzer oder ein rauscharmer Verstärker oder ein Frequenzumsetzungsmodul ist.

6. Verfahren (50) nach einem der vorhergehenden Ansprüche, **dadurch gekennzeichnet, dass** das Zielsignal ein intermittierendes Signal und/oder ein Signal mit im Zeitverlauf variabler Frequenz ist.

7. Verfahren zur Schätzung einer Position eines im Wesentlichen auf der Oberfläche der Erde befindlichen Senders, **dadurch gekennzeichnet, dass** die Position des Senders in Abhängigkeit von einer Einfallsrichtung geschätzt wird, die für ein von dem Sender gesendetes Zielsignal nach einem der Ansprüche 1 bis 6 geschätzt wird.

8. Verfahren zur Schätzung einer Fluglage eines Satelliten (20) in einer Erdumlaufbahn, wobei der Satellit wenigstens eine erste Messantenne (22a), eine zweite Messantenne (22b) und eine Empfangsantenne (21) mit einem maximalen Gewinn, der höher als der jeweilige maximale Gewinn der ersten Messantenne und der zweiten Messantenne ist, aufweist, **dadurch gekennzeichnet, dass** die Fluglage des Satelliten (20) in Abhängigkeit von einer Einfallsrichtung geschätzt wird, die für ein Zielsignal, das von einem Sender mit bekannter Position relativ zu dem Satelliten (20) gesendet wird, nach einem der Ansprüche 1 bis 6 geschätzt wird.

9. Computerprogrammprodukt, **dadurch gekennzeichnet, dass** es einen Satz von Programmcodeanweisungen umfasst, die, wenn sie von einem Prozessor ausgeführt werden, ein Verfahren (50) zur Schätzung einer Einfallsrichtung nach einem der Ansprüche 1 bis 6 durchführen.

10. System (10) zur Schätzung einer Einfallsrichtung eines Zielsignals relativ zu einem Netz (20) von Messantennen eines Satelliten (20) in einer Erdumlaufbahn, wobei die Einfallsrichtung des Zielsignals in Abhängigkeit von "Messsignale" genannten Signalen geschätzt wird, die dem Zielsignal entsprechen, das durch wenigstens eine erste Messantenne (22a) bzw. eine zweite Messantenne (22b) des Netzes (20) von Messantennen empfangen wird, **dadurch gekennzeichnet, dass** das System (10) außerdem umfasst:

Kombinationsmittel, die dafür ausgelegt sind, jedes der Messsignale mit einem "Referenzsignal" genannten Signal zu kombinieren, das dem Zielsignal entspricht, das durch eine Empfangsantenne (21) des Satelliten (20) empfangen wird, wobei die Empfangsantenne einen maximalen Gewinn aufweist, der höher als der jeweilige maximale Gewinn der ersten Messantenne (22a) und der zweiten Messantenne (22b) ist,
Schätzmittel, die dafür ausgelegt sind, die Einfallsrichtung des Zielsignals ausgehend von Signalen zu schätzen, die durch Kombination jedes der Messsignale mit dem Referenzsignal erhalten wurden.

11. System (10) nach Anspruch 10, **dadurch gekennzeichnet, dass** der Satellit (20) mehrere Empfangsantennen (21) aufweist, die verschiedene geographische Gebiete (Zg) der Erde (T) abdecken, wobei jede Empfangsantenne (21) einen maximalen Gewinn aufweist, der höher als der jeweilige maximale Gewinn der ersten Messantenne (22a) und der zweiten Messantenne (22b) ist, wobei die erste Messantenne und die zweite Messantenne alle geographischen Gebiete abdecken, die von den verschiedenen Empfangsantennen (21) abgedeckt werden.

12. System (10) nach Anspruch 10 oder 11, **dadurch gekennzeichnet, dass** der Satellit (20) Ketten zur Verarbeitung der Messsignale aufweist, wobei diese Verarbeitungsketten wenigstens eine gemeinsam genutzte Hardware-Ressource umfassen, die eingesetzt wird, um das Messsignal der ersten Messantenne (22a) und das Messsignal der zweiten Messantenne (22b) in verschiedenen jeweiligen Zeitintervallen auf einmal zu verarbeiten.

13. System (10) nach Anspruch 12, **dadurch gekennzeichnet, dass** wenigstens eine Hardware-Ressource, die von den Verarbeitungsketten des Satelliten (20) gemeinsam genutzt wird, ein Analog-Digital-Umsetzer oder ein rauscharmer Verstärker oder ein Frequenzumsetzungsmodul ist.

14. System (10) nach einem der Ansprüche 10 bis 13, **dadurch gekennzeichnet, dass** der Satellit (20) ein Telekommunikationssatellit oder Satellit zur Beobachtung künstlicher Signale, die von der Erde aus gesendet werden, ist und jede Empfangsantenne (21) eine Empfangsantenne einer Telekommunikations- oder Beobachtungs-Nutzlast des Satelliten (20) ist.

15. System (10) nach einem der Ansprüche 10 bis 14, **dadurch gekennzeichnet, dass** sich der Satellit (20) in einer geostationären Umlaufbahn befindet, und dadurch, dass die erste Messantenne (22a) und die zweite Messantenne (22b) jeweils ein Sichtfeld mit einer Breite aufweisen, die größer als 3° und vorzugsweise größer als 10° ist.

**Claims**

1. Method (50) for estimating a direction of arrival of a target signal with respect to an array (22) of measurement antennas of a satellite (20) in terrestrial orbit, said direction of arrival of the target signal being estimated as a function of signals, referred to as measurement signals, corresponding to the target signal received by respectively at least a first measurement antenna (22a) and a second measurement antenna (22b) of said array (22) of measurement antennas, **characterized in that** the method (50) comprises steps of:

   (51) combining each of the measurement signals with a signal, referred to as the reference signal, corresponding to the target signal received by a reception antenna (21) of the satellite (20), said reception antenna being of greater maximum gain than the respective maximum gains of the first measurement antenna (22a) and of the second measurement antenna (22b),
   (52) estimating the direction of arrival of the target signal on the basis of the signals obtained by combining each of said measurement signals with the reference signal.

2. Method (50) according to Claim 1, **characterized in that**, the satellite (20) comprising several reception antennas (21) servicing various geographical zones (Zg) of the Earth (T), each reception antenna (21) being of greater maximum gain than the respective maximum gains of the first measurement antenna (22a) and of the second measurement antenna (22b), said method comprises the determination of the reception antenna (21) by which the target signal is received, the signal received by the determined reception antenna being used as reference signal in the course of the combining step (51).

3. Method (50) according to either of the preceding claims, **characterized in that**, in the course of the combining step (51):

   a first combination is calculated between the reference signal and the measurement signal that are received by respectively the reception antenna (21) and the first measurement antenna (22a) in the course of a first time interval,
   a second combination is calculated between the reference signal and the measurement signal that are received by respectively the reception antenna (21) and the second measurement antenna (22b) in the course of a second time interval distinct from the first time interval,

   the direction of arrival of the target signal being estimated as a function at least of said first combination and of said second combination.

4. Method (50) according to Claim 3, **characterized in that** at least one hardware resource of chains for processing the measurement signals aboard the satellite (20) is implemented to process both the measurement signal of the first measurement antenna (22a) and the measurement signal of the second measurement antenna (22b) in the course of different respective time intervals.

5. Method (50) according to Claim 4, **characterized in that** at least one hardware resource implemented to process both the measurement signal of the first measurement antenna (22a) and the measurement signal of the second measurement antenna (22b) in the course of different respective time intervals is an analog-digital converter or a low noise amplifier or a frequency conversion module.

6. Method (50) according to one of the preceding claims, **characterized in that** the target signal is an intermittent signal and/or a time varying frequency signal.

7. Method for estimating a position of an emitter substantially on the surface of the Earth, **characterized in that** the position of said emitter is estimated as a function of a direction of arrival estimated, for a target signal emitted by said emitter, in accordance with one of Claims 1 to 6.

8. Method for estimating an attitude of a satellite (20) in terrestrial orbit, said satellite comprising at least a first measurement antenna (22a), a second measurement antenna (22b) and a reception antenna (21) of greater maximum gain than the respective maximum gains of said first measurement antenna and of said second measurement antenna, **characterized in that** the attitude of the satellite (20) is estimated as a function of a direction of arrival estimated, for a target signal emitted by an emitter of known position with respect to the satellite (20), in accordance with one of Claims 1 to 6.

9. Computer program product, **characterized in that** it comprises a set of program code instructions which, when they are executed by a processor, implement a method (50) for estimating direction of arrival according to one of Claims 1 to 6.

10. System (10) for estimating a direction of arrival of a target signal with respect to an array (20) of measurement antennas of a satellite (20) in terrestrial orbit, said direction of arrival of the target signal being estimated as a function of signals, referred to as measurement signals, corresponding to the target signal received by respectively at least a first measurement antenna (22a) and a second measurement antenna (22b) of said array (20) of measurement antennas, **characterized in that** the system (10) furthermore comprises:

combining means suitable for combining each of the measurement signals with a signal, referred to as the reference signal, corresponding to the target signal received by a reception antenna (21) of the satellite (20), said reception antenna being of greater maximum gain than the respective maximum gains of the first measurement antenna (22a) and of the second measurement antenna (22b),
estimating means suitable for estimating the direction of arrival of the target signal on the basis of the signals obtained by combining each of said measurement signals with the reference signal.

11. System (10) according to Claim 10, **characterized in that** the satellite (20) comprises several reception antennas (21) servicing various geographical zones (Zg) of the Earth (T), each reception antenna (21) being of greater maximum gain than the respective maximum gains of the first measurement antenna (22a) and of the second measurement antenna (22b), said first measurement antenna and said second measurement antenna servicing all the geographical zones serviced by the various reception antennas (21).

12. System (10) according to Claim 10 or 11, **characterized in that** the satellite (20) comprises chains for processing the measurement signals, said processing chains comprising at least one shared hardware resource implemented to process both the measurement signal of the first measurement antenna (22a) and the measurement signal of the second measurement antenna (22b) in the course of different respective time intervals.

13. System (10) according to Claim 12, **characterized in that** at least one shared hardware resource of the processing chains of the satellite (20) is an analog-digital converter or a low noise amplifier or a frequency conversion module.

14. System (10) according to one of Claims 10 to 13, **characterized in that** the satellite (20) is a telecommunications satellite or a satellite for observation of artificial signals emitted from the Earth, and each reception antenna (21) is a reception antenna for a telecommunications or observation payload of said satellite (20).

15. System (10) according to one of Claims 10 to 14, **characterized in that** the satellite (20) is in geostationary orbit, and **in that** the first measurement antenna (22a) and the second measurement antenna (22b) each exhibit a field of view of width greater than 3°, preferably greater than 10°.

Fig.1

Signaux de
mesure

Signal de
référence

-51-

50

-52-

Direction
d'arrivée

Fig.2

Fig.3

Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6147640 A

- US 20060082501 A

**Littérature non-brevet citée dans la description**

- **R. O. SCHMIDT.** Multiple Emitter Location and Signal Parameter Estimation. *IEEE Transactions on Antennas and Propagation,* Mars 1986, vol. 34 (3

- **R. ROY et al.** ESPRIT : Estimation of Signal Parameters via Rotational Invariance Techniques. *IEEE Transactions on Acoustics, Speech and Signal Processing,* Juillet 1989, vol. 37 (7